# EUROPEAN PATENT APPLICATION

(11) **EP 4 790 640 A1**
(43) Date of publication of application: **12.08.2026**
(21) Application number: 25156170.0
(22) Date of filing: 06.02.2025
(51) Int. Cl.: G06T 7/00, G06T 7/62

(54) **ABLATION STATUS MEASURING DEVICE AND METHOD**

(71) Applicant: ESAOTE S.p.A., 16152 Genova (IT); MedCom GmbH, 64283 Darmstadt (DE)
(72) Inventor: De Beni, Stefano, 16123 Genova (IT); Stefanov, Andrei, 64665 Alsbach-Haehnlein (DE); De Vecchis, Gianmarco, 16144 Genova (IT); Kolev, Velizar, 64285 Darmstadt (DE); Crocco, Marco, 15076 Ovada (AL) (IT)
(74) Representative: Bessi, Lorenzo

(57) **Abstract**

An ablation status measuring device comprises:
a) an imaging device of the anatomy of at least a ROI (Region of Interest) located in a target body and containing a target object to be ablated and an ablation tool;
b) a control unit of the imaging device being configured to operate the imaging device so that a sequence of at least two anatomical images of the target ROI is acquired separated by a certain time interval, which is dedicated to allow the activation of the ablation tool;
c) an image processor processing the at least two images generated by the imaging device and registering the said images;
wherein said image processor is configured to:
i) carry out an image segmentation of the said images and carry out, automatically or by manual selection of a user, the recognition of one or more regions such as the pixels or voxels in the images of the said ROI which are representing a tumour and which are representing regions subjected to ablation by the said ablation tool;
ii) calculate from the image data of the said images the positions and dimensions of an area or volume representing the said tumour in the said ROI and to calculate the position and the dimensions of region or a volume subjected to ablation in the said ROI in said at least two anatomic images;
iii) generate a bidimensional icon having a predefined shape and a predefined dimension and representing the imaged tumour in the said first image and a further bidimensional icon having a predefined shape and a predefined dimension representing the ablated tissue and for which the ablated dimensions are set as a multiple of the dimensions of the bidimensional icon representing the tumoral tissue, said multiple being a multiplicative factor of the dimensions of the bidimensional icon representing the tumour which multiplication factor is selected within the real numbers, preferably the rational numbers or the natural numbers;
iv) determine the centres of the shapes of the said bidimensional icons and to position the said centres one with respect to the other in such a way that the relative positions of the bidimensional icons representing the ablated region and representing the tumoral region are calculated as a function of the ablated percentage of the tumoral tissue determined by comparing the tumoral region identified and segmented in a first anatomical region of a ROI containing the said tumoral tissue with the region in the same ROI identified as ablated tissue in said second of the said at two anatomic images;
v) display the said bidimensional icons together on a display by positioning the said two icons one with respect to the other at the distance of the centers thereof calculated at step g) and each icon having its predetermined shape and its predetermined dimension according to iii), the said two icons overlapping each other in a measure correlated to the percentage of ablated tissue tumor calculated from the at least two images;
vi) activate alternatively one to the other the ablation tool and the imaging device for at least one or more times further to the first activation of the ablation tool and to the second activation of the imaging device;
vii) carry out the computations and display according to iv) to v) for the first image and the n-th image at an n-th repetion of the image acquisition.

## Description

### FIELD OF THE INVENTION

The present invention relates to an ablation status metering device and to a method for carrying out ablation status measures.

### STATE OF THE ART

Treatment of tumours, in particular of liver tumours, is generally carried out by thermal ablation of the tumoral tissues. Image guided thermal ablation burns the tumoral tissues by means of microwaves or radiofrequency and the ablation probe is guided at the site of the tumour by using imaging techniques like, for example, ultrasound, computed tomography, magnetic resonance imaging, or similar imaging techniques.

The system is generally combined with stereotactic navigation systems which allow to achieve a high precision of the positioning of the ablation probe in relation to the position of the tumoral tissue.

Treatment success is mainly depending on the fact that a complete ablation of the tumoral tissue is carried out. The ablation probe, having a certain aperture, is able to irradiate a certain area or volume which is effectively burned out. In order to treat the entire tumoral tissue, there is the need to displace the probe under control of image guidance systems relatively to the position and the dimensions of the tumour in order to burn it completely out.

In order to ensure that the tumoral tissue is ablated completely, the current practice defines a so-called safety margin, which is an area or a volume delimited by a virtually defined surface and encapsulating or encircling the tumour and also a certain amount of tissue surrounding it, the said surface having a predetermined distance from the surface of the tumoral tissue and enclosing also a certain part of non-tumoral tissue surrounding the said tumoral tissue. The completeness of the ablation is then related to this safety margin in such a way that the area or volume which has been treated should have such a dimension and shape to cover also the tissues up to the safety margins consisting in the said encapsulating or encircling surface. In this case there is a certainty that the entire tumoral mass has been treated and thermally ablated.

The predefined safety margin, i.e. the surface encircling or inscribing the volume occupied by the tumoral tissue, may be set having different distances from the surface of the tumoral tissue, depending on the type and quality of the tumour.

Generally, for tumours having metastases the safety margin is placed at a greater distance from the surface of the tumour than in other cases. Typical distances of the surface forming the said safety margin from the surface of the volume occupied by the tumour are in the order of about some mm, for example 5 mm to about 10 mm.

Currently, the status of the ablation is measured by comparing a post ablation CT image scan of the ROI (Region of Interest) containing the target object, in this case mainly the tumour, with a pre ablation CT image of the same ROI.

Comparison is carried out visually by human specialists and, if the ablation appears not to be complete, a new session of thermal ablation is executed targeted to the residual tumoral tissue and to their ablation. This kind of evaluation of the status of the ablation process is strongly dependent on the skills of the person evaluating the pre ablation and post ablation CT images. This implies that no standardization of the accuracy of the ablation status evaluation is possible and that the result of the measure is strongly dependent on the person carrying out the measurement, so that the outcomes of the measure may vary depending on which person has carried out the evaluation.

A method for trying to standardize the assessment of ablation completeness in thermal ablation processes is disclosed in the article entitled: Volumetric Quantitative Ablation Margins for Assessment of Ablation Completeness in Thermal Ablation of Liver Tumors, Raluca-Maria Sandu, Iwan Paolucci, Simeon J. S. Ruiter, Raphael Sznitman, Koert P. de Jong, Jacob Freedman, Stefan Weber and Pascale Tinguely, Frontiers in Oncology Methods published 10.03.2021, doi: 10.3389/fomc.2021.623098.

The method and the measuring device according to the above cited article provides for a less intuitive and more complicated output display of the status of the ablation process. Furthermore, the method disclosed in the article is not satisfying when considering tumours which are at the margins of the liver and for which the safety margin lies outside of the liver.

Indeed, in the above-mentioned method according to the state of the art, the display of the measuring device is not dynamically adapting to the new conditions determined by a new status of the ablation process. The representation of the measured data is also not intuitive and requests that the reader must elaborate the results displayed in order to understand their concrete meaning relatively to the status of the ablation in particular to the steps to carry out in a following additional ablation step and particularly in relation to the direction of displacement of the ablation probe.

### SUMMARY OF THE INVENTION

It is thus an object of embodiments herein to provide ablation measuring devices and computer implemented methods which furnish a reliable measure of the position and of the dimensions of an area or volume of a target subjected to ablation relatively to the position and dimensions of a tumour and which provide an intuitive display of said measured conditions from which the user can intuitively and directly determine the degree of coverage of a tumour by a region subjected to ablation by an ablation probe indicating also how much tissue has to be ablated in order to complete the ablation process, namely to completely ablate the tumour and the tissue surrounding the tumour within a certain distance from it.

In an embodiment, an ablation status measuring device comprises:
a) an imaging device of the anatomy of at least a ROI (Region of Interest) located in a target body and containing a target object to be ablated and an ablation tool;
b) a control unit of the imaging device configured to operate the imaging device so that a sequence of at least two anatomical images of the target ROI is acquired separated by a certain time interval, which is dedicated to allow the activation of the ablation tool;
c) an image processor processing the at least two images generated by the imaging device and registering said images;
wherein said image processor is configured to:
i) carry out an image segmentation of said images and carry out, automatically or by manual selection of a user, the identification of one or more regions, such as the pixels or voxels in the images of said ROI, which are representing a tumour and which are representing regions subjected to ablation by said ablation tool;
ii) calculate from the image data of said images the positions and dimensions of an area or volume representing said tumour in said ROI and calculate the position and the dimensions of a region or a volume subjected to ablation in said ROI in said at least two anatomic images;
iii) generate a graphic representation, particularly a bidimensional icon, having a predefined shape and a predefined dimension and representing the imaged tumour in said first image and a further graphic representation, particularly a further bidimensional icon, having a predefined shape and a predefined dimension representing the ablated tissue and for which the ablated dimensions are set as a multiple of the dimensions of the bidimensional icon representing the tumoral tissue, said multiple being a multiplicative factor of the dimensions of the bidimensional icon representing the tumour which multiplication factor is selected within the real numbers, preferably the rational numbers or the natural numbers;
iv) determine the centres of the shapes of said bidimensional icons and position said centres one with respect to the other in such a way that the relative positions of the bidimensional icons representing the ablated region and representing the tumoral region are calculated as a function of the ablated percentage of the tumoral tissue determined by comparing the tumoral region identified and segmented in a first anatomical region of a ROI containing said tumoral tissue with the region in the same ROI identified as ablated tissue in said second of said at least two anatomic images;
v) display said bidimensional icons together on a display by positioning said two icons one with respect to the other at the distance of the centres thereof calculated at step iv), each icon having its predetermined shape and its predetermined dimension according to iii), the said two icons overlapping each other in a measure correlated to the percentage of ablated tissue tumour calculated from the at least two images;
vi) activate alternatively one to the other the ablation tool and the imaging device for at least one or more times further to the first activation of the ablation tool and to the second activation of the imaging device;
vii) carry out the computations and display according to iv) to v) for the first image and the n-th image at an n-th repetition of the image acquisition.

According to an embodiment, the imaging device comprises a CT imaging device, an ultrasound imaging apparatus, a PET apparatus, a SPECT apparatus, a MRI apparatus or the like. Also a combination of different imaging apparatus may be used within the same session as long as it is possible to determine the shape and dimensions of the tumour and of the necrotized region.

According to an embodiment the bidimensional icons representing the tumour and the ablated region have the shape of circles.

In a further embodiment, the image processor is configured to generate a further graphic representation, particularly a further bidimensional icon, representing a so-called safety margin and having a predefined shape and which dimensions are calculated as a function of the volume ratio between tumour and safety margin regions in such a way to enclose the region representing the tumour.

According to an embodiment, the processing unit is configured to set the shape of the bidimensional icon representing a safety margin as the same shape of the bidimensional icon representing the tumour while the said processing unit is further configured to define in said first image data a closed surface enclosing the tumour and having a certain predefined distance from the surface of the region identified as a tumour in said first image, to compute from the segmented image data of the first image the volumes of the tumour and the volume of the safety margin and to compute the ratio between the volume of said margin and of the tumour and to determine the dimension of said bidimensional icon representing the safety margin by multiplying the bidimensional dimensions of the icon representing the tumour by a factor corresponding to said ratio and by setting an upper maximum value to said factor lower than the multiplicative factor for calculating the dimension of the bidimensional icon representing the ablated region. The processing unit is further configured to display the bidimensional icon representing said safety margin together with the icons representing the tumour and the ablated region with its centre coinciding with the centre of the bidimensional icon representing the tumour.

As it appears clearly from the above, the metering device according to the above embodiments generates segmented virtual images of at least the tumour or tumours present in said ROI and of the ablated area relatively to the position and dimensions of the tumour. The display enables the user to immediately verify if the ablated area is coinciding with the tumour in relation to the position and to the extension of this area.

The safety margin ensures that, if the ablated region coincides with the area delimited by the said safety margin, i.e. encloses said area, the tumour has been surely ablated completely.

The dimension of the safety margin set in the first image can be set according to empirical data known in the art and which are differently set depending on the kind of tumour. These data are available and known to the skilled person and further also to a ratio between the volume of the tumour calculated from the acquired image before ablation and the volume of a safety region set according to empirical data provided for the imaged kind of tumour and setting a maximum value for said ratio.

The intersections of the circular icons directly indicate visually to the user the percentage of ablated tumoral tissue and of the ablated tissue within the safety margin and also the direction for displacing the ablation tool in order to continue ablation for covering the entire region occupied by the tumour and also enclosed or delimited by said safety margin.

In a preferred simplified embodiment, the icons are all of circular shape and their dimensions are calculated referring to their radius, such that the image processor is configured to set the radius of the bidimensional icon representing the tumour with a certain value, set the radius of the bidimensional icon representing the region subjected to ablation, i.e. the necrotized region, by multiplying with a predetermine multiplicative factor being a real number the value of the radius set for the bidimensional icon representing the tumour and determine the radius of the bidimensional icon representing the safety margin by multiplying the radius of the icon representing the tumour with the calculated value of the ratio between the determined volumes of the tumour and of the safety margin on the first image.

According to a further feature, the processing unit is configured:
to calculate the distance of the icon representing the tumour from the icon representing the ablated region by determining the offset of the centre of said icons along an axis by determining the intersection area between said icons calculated as a function of the percentage of the ablated tumour which is determined from the comparison of said first image and an image following an n-th ablation step and by using an iterative algorithm for approximating the computed intersection area between the tumour and the ablated region in said images; and
to compute the distance of the icon representing the ablated region from the icon representing said safety margin by determining the offset of the centre of the said icons along said axis by determining the intersection area between said icons from the percentage of the ablated safety margin which is determined from the comparison of said first image and an image following an n-th ablation step and by using an iterative algorithm for approximating the computed intersection are between the safety margin and the ablated region and without violating the previously computed value of the intersection area between the tumour and the ablated region in said images.

In other words, the device according to the above disclosure comprises an image processor which is configured to carry out the generation and display of bidimensional icons representing, respectively, the tumour, the ablated region and a safety margin by positioning relatively to one another said icons such that the relative distance of said centres determines an overlapping of the icon representing the ablated region on the icon representing the tumour and the safety margin by which an intersection area of the said icons is determined corresponding to the percentage of the ablated tumour and of the ablated safety margin determined by comparing a first anatomical image of the ROI containing the image of said tumour and an n-th anatomical image of the same ROI in which the image of the tumour, of the safety margin and of the ablated region after an n-th ablation step are identified and their position, and/or boundaries and/or volumes are determined by segmentation and by automatic or manual setting.

According to a further feature, when the tumour is near to the border of a target organ and the safety margin set is intersecting the said border and falling also in the region of the tissue outside said target organ, the image processor is configured to limit the safety margin to the region inside the border of the target organ, not taking into account the region of the safety margin falling outside of the said border of the target organ.

In the above description the feature relating to a image processor configured to carry out some steps, relates to the fact that the image processor comprises a memory or is communicating with a memory in which one or more software programs are stored comprising the instructions for the image processor which are executable by the image processor and which, when executed by the said image processor, renders said image processor and/or one or more peripherals controlled by it or associated to it able to execute the processing steps. Thus the term "configured to carry out steps" means and can be substituted by the wording "the image processor comprising a memory or is communicating with a memory in which one or more software programs are stored comprising the instructions for the image processor which are executable by the image processor and which, when executed by said image processor, renders said image processor and/or one or more peripherals controlled by it or associated to it able to execute the processing steps of". The above argument applies also for the control unit.

The invention relates also to a computer-implemented method for measuring the status of an ablation of tumoral tissue comprising:
i) acquiring at least two anatomic images of a ROI at different times, one of said images being an image acquired prior to the execution of an ablation process and the second one of said images being an image acquired after the execution of the said ablation process;
ii) segmenting and registering the anatomic images for determining image regions representing a tumour in the first one of said images and a region subjected to ablation in said second image;
iii) generating an icon representing the tumour, an icon representing the ablated area and an icon representing a region enclosing the tumour smaller than the ablated area, named safety margin;
iv) selecting a circular shape of said icons and defining predetermined fixed radius of said icons representing the tumour and representing the ablated region, the radius of the circle representing the ablated region being calculated as a multiple of the radius set for the circle representing the tumour, said multiple being calculated by a multiplicative factor being a real number, preferably a natural number;
v) calculating the radius of the circle representing said safety margin by multiplying the radius of the circle representing the tumour by a factor corresponding to the ratio between the volume of the safety margin and the volume of the tumour which are determined from said first and said at least second anatomical images and by setting a maximum value of said factor which is smaller than the multiplicative factor for calculating the radius of the circle representing the ablated region used in step iv);
vi) determine the relative position of the circles representing the tumour and the safety margin which position corresponds to a concentric position of said circles;
vii) calculate the position of the centre of the circle representing the ablated region relatively to the centre of the circle representing the tumour by computing the intersection area of the circle representing the tumour and the one representing the ablated region as a function of the percentage of the ablated tumour determined from the comparison of said first image and said second image by means of an iterative algorithm calculating the distance of the centre of the circle representing the ablated region and of the circle representing the tumour resulting by approximating said intersection area;
viii) calculate the position of the centre of the circle representing the ablated region relatively to the centre of the circle representing the safety margin by computing the intersection area of the circle representing the safety margin and the one representing the ablated region as a function of the percentage of the ablated safety margin determined from the comparison of said first image and said second image and, by means of an iterative algorithm, calculating the distance of the centre of the circle representing the ablated region and of the circle representing the safety resulting by approximating said intersection area, without violating the conditions determined at step vii);
ix) display said circles on a display having different colours or grey shades and the circle representing the ablated region having a level of transparency such that, when overlapped on the other circles, said circles are still visible and positioning the centres of the said circles such that the circle representing the tumour and the circle representing the safety margin are concentric and the centre of the circle representing the ablated region is offset from the centres of the circles representing the tumour and the safety margin such that an intersection area is generated between the said circles corresponding to the percentage of the ablated tumour and to the percentage of the ablated safety margin as determined at step vii) and viii).

If the circle representing the tumour and the circle representing the safety margin are not completely overlapped by the circle representing the ablated region, the ablation process is not terminated and a certain amount of tumour has to be still ablated.

If the circle representing the tumour is completely overlapped by the circle representing the ablated region but the circle representing the safety margin is not completely overlapped, then also in this case, the ablation process is not terminated and a certain amount of tumour has to be still ablated.

In both cases the control unit may automatically activate the ablation tool for allowing to carry out a further ablation step and after the ablation step is terminated the control unit provides for activating the imaging device for acquiring a further post-ablation image to be compared with the first image of the sequence of images acquired and to carry out again the steps i) to ix).

Further iterations will be needed if the display of the ablation meter shows that the icon representing the tumour and/or the icon representing the ablation margin are not completely covered by the icon representing the ablated region.

If the circle representing the ablated region completely overlaps the circles representing the tumour and the one representing the safety margin, then the ablation meter indicates that the ablation is complete and the ablated region has fully covered the area corresponding to the tumour and the one corresponding to the safety margin.

According to a further feature the method provides the step of carrying out a predefined sequence comprising the acquisition of a first anatomic image of a target ROI before any step of ablation has been carried out and a certain number of following acquisitions of anatomic images of the said target ROI after having carried out an ablation step, said certain number comprising at least a second n-th image acquisitions at certain time intervals one from the other and after, respectively, a first, second or an n-th ablation step;
for each ablation step and each post image acquisition step the steps being carried out corresponding to step ii) to ix);
and at step ix) each time updating the displayed icons of the tumour and of the safety margin and of the ablated region and their relative position as a function of the data determined at step ii) to viii).

According to a further feature, when the tumour is near to the border of a target organ and the safety margin set is intersecting said border and falling also in the region of the tissue outside said target organ of the image processor is configured to limit the safety margin to the region inside the border of the target organ, not taking into account the region of the safety margin falling outside of the said border of the target organ.

The invention relates also to a computer product directly loadable into the memory of a digital computer and comprising software code portions for performing the method according to embodiments herein when the product is run on a computer.

The invention relates also to a combined imaging device and ablation device, said imaging device comprising a control unit which carry out a control software comprising the instructions for making the device capable of executing a time sequence of atomic image acquisitions of a ROI, the time interval between two following acquisitions being such as to allow to carry out an ablation process, the said imaging device comprising an ablation status measuring device according to one or more of the previously disclosed combination of features and having a control unit and an image processor executing a software in which the instructions are coded for making the said control unit and/or the side image processor able to execute the steps of the above disclosed ablation process metering method.

Further improvements of the invention will form the subject of the dependent claims.

### BRIEF DESCRIPTION OF THE DRAWINGS

The characteristics of the invention and the advantages derived therefrom will be more apparent from the following description of non-limiting embodiments, illustrated in the annexed drawings, in which:
Fig. 1 is a high-level block diagram of a device according to embodiments herein.
Fig. 2 shows an exemplary embodiment of a workflow executed by the device according to embodiments herein.
Fig. 3 shows a block diagram of an example of an ultrasound imaging device being part of the device according to embodiments herein.
Fig. 4 is a block diagram of an example of an ablation device for carrying out guided ablation and being provided in the device according to embodiments herein.
Fig. 5 is an example of a display generated by the metering device according to embodiments herein in combination with the display of the anatomic image of the ROI and specifically of a liver in which a tumour is present.
Fig. 6 to 10 are examples of the ablation meter display generated by the device according to embodiments herein and of the indications shown on said display.

### DETAILED DESCRIPTION OF A PREFERRED EMBODIMENT

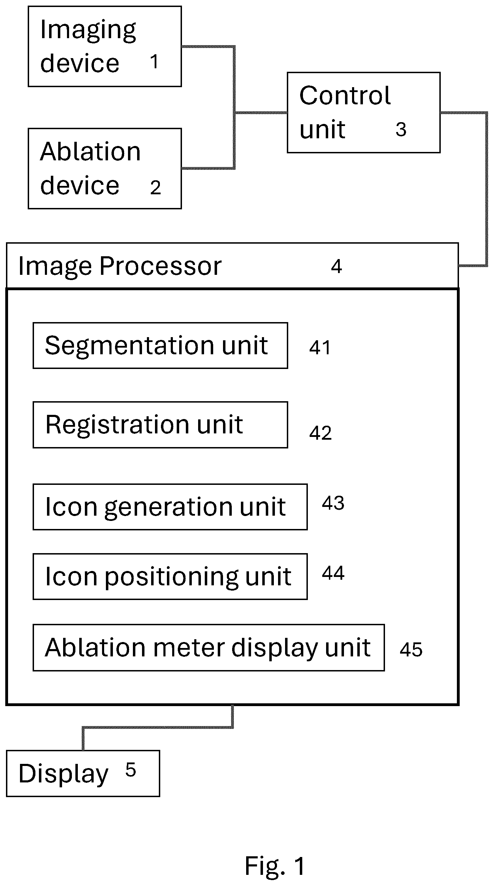

Figure 1 shows a high-level block diagram of device for metering the status of an ablation process of a certain region within a target ROI (Region of Interest) according to an embodiment.

The metering device comprises an image processor 4 which is linked to an imaging device 1 and to an ablation device 2. The imaging device and the ablation device are controlled by a control unit 3, which is configured to activate the imaging device 1 for acquiring an anatomic image, particularly a CT image or similar, of a predefined ROI in which the region to be ablated is provided and, alternatively, to activate the ablation device for ablating the tissue provided in said ROI.

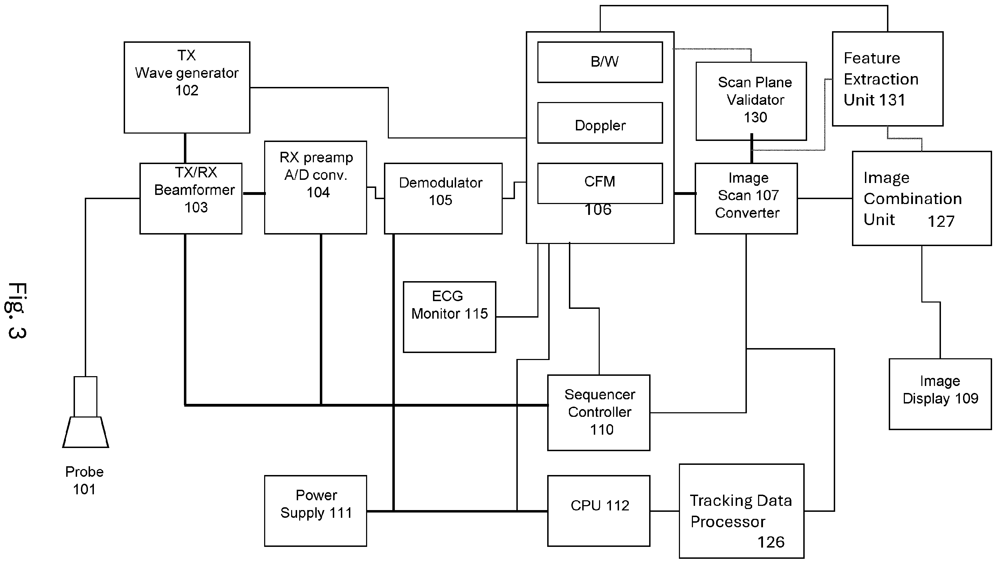

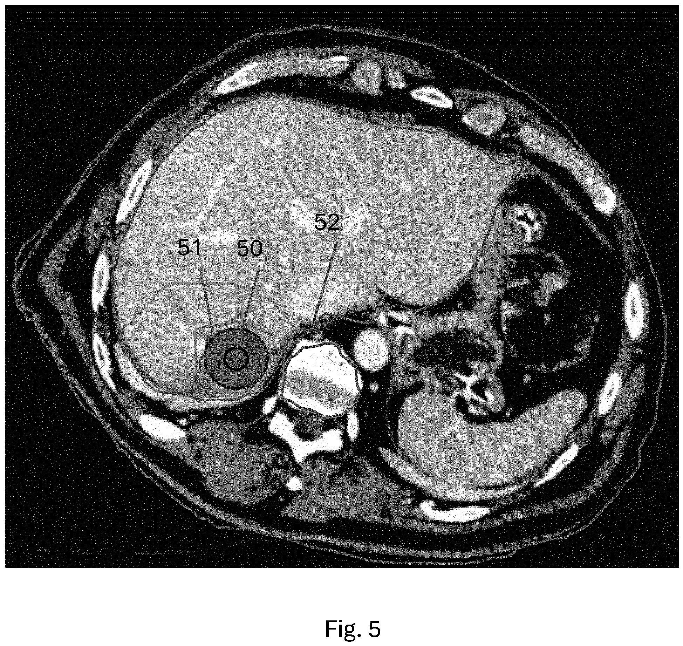

Imaging devices are known in the art and an exemplary embodiment will be disclosed in the following description with reference to figure 3. Also, ablation devices are known in the art and an exemplary embodiment which might be used in the present invention will be disclosed in the following with reference to figure 5.

The control unit 3 is configured by providing manual commands for activating and disactivating the imaging device 1 and the ablation device or by providing the said control unit with a control processor which carry out a control program in which the instructions are coded for driving the imaging device and the ablation device according to embodiments herein.

The images acquired by the imaging device 1 are further processed by an image processor 4. The image processor 4 comprises an image segmentation unit 41, an image registration unit 42, an icon generation unit 43, an icon positioning unit 44 in a reference system and an ablation meter display unit 45. The image processor 4 is provided with an output which sends the ablation meter display data to a display 5 on which these data are shown to the user.

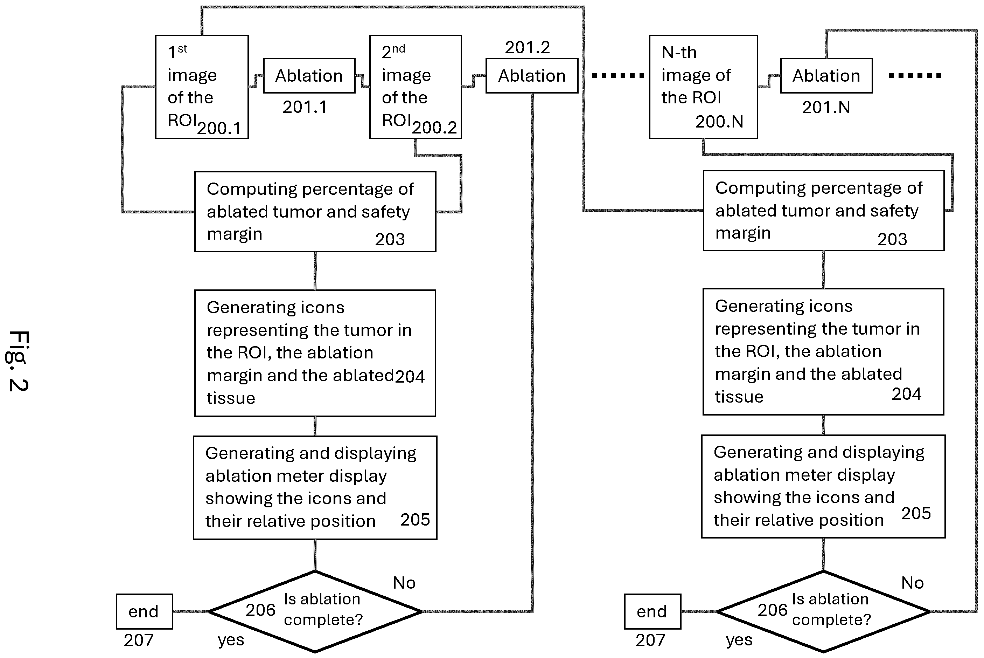

As shown in the example of figure 2, the control unit 1 and the image processor 4 operates in such a way to drive the imaging device to carry out at least a first and a second anatomic image acquisition of a selected target ROI. The said image acquisitions are carried out at different times and one before an ablation is carried out and one after the ablation has been carried out. The time interval between the two image acquisitions is set such that an ablation step can be carried out.

Figure 2 represents an example of workflow of the metering device according to the present invention. A first acquisition of an image of a selected target ROI is carried out. The image acquired is processed in order to identify a region of said ROI corresponding to a tumour. This step is indicated with 200.1. Once the tumour has been individuated in the image 200.1, an ablation step is carried out as indicated by 201.1 which is ended after a certain period of time supposed to be sufficient for having burned out, i.e. ablated, the tumour.

A second image acquisition is then carried out as indicated by 202.2 and in this second image the region corresponding to the ablated tissue is identified.

From the first and from the second images, i.e. from the image acquired prior to the first ablation cycle and from the image acquired after this first ablation cycle, the image processor determines, respectively, the position and the dimension of the region of the ROI representing the tumour and the position and the dimension of the region representing the ablated tissue. Alternatively to an automatic definition of the region of the image related to the tumour and of the region of the image related to the ablated tissue by carrying out image recognition algorithms executed by an image processor, these regions may also be set manually, by manually drawing the boundaries of the region of the image related to a tumour and the boundaries of the region related to the ablated tissue.

According to an embodiment, for determining position and dimension of the region representing a tumour and of the ablated region, the image processor 4 carries out a segmentation of the two acquired images and a registration of the said two images.

Using the data of the dimension and of the position of the region representing a tumour in the first image acquired at step 200.1 and computed as a function of the image data related to the said first image, the image processor executes the computation of the volumes of the region corresponding to the tumour and of the region corresponding to the ablated tissue form the image data of the said two anatomic images as indicated in step 203.

Box 204 shows an icon generation step in which the image processor generates icons representing the tumour and having a specific peripheral shape and specific dimensions. In a preferred embodiment the shape of the icons is preferably circular and the dimensions, i.e. the radius of the circles, are set as described below.

The radius of the circle representing the tumour is set as a certain value which is a fixed value. Similarly, the value of the circle representing the ablated tissue is set to a fixed value which is greater that the value of the radius of the circle representing the tumour. According to a preferred embodiment, the radius of the circle representing the ablated region is calculated by multiplying the radius of the circle representing the tumour by a factor. This multiplicative factor is a real number, preferably a rational number, especially a natural number.

The radius of the circle representing the safety margin is calculated by multiplying the radius of the circle representing the tumour by a factor which is smaller than the factor used for calculating the radius of the circle representing the ablated region, but bigger than 1, since the safety margin must be smaller than the ablated region and bigger than the tumour.

In a preferred embodiment, the factor for calculating the radius of the circle representing the safety margin is determined as a function of the volumes of the region reproducing the tumour and of the regions reproducing the ablated tissue obtained from the anatomic images. Particularly, said factor is calculated as the ratio between the volume of the safety margin and the volume of the tumour as determined from the images.

At step 205, the icons, i.e. the circles, are displayed on a display each having the corresponding dimension, i.e. the corresponding radius when the icons selected are circles as determined according to step 204.

The relative positions of the icons, i.e. of the circles, is also determined by the image processor and the icons are displayed at these relative positions along an axis, which can be a horizontal axis.

According to an embodiment, and particularly with reference to icons having a circular shape, their position is defined by the position of their centres.

According to an embodiment, the position of the centres is determined by the image processor by executing coded instructions for performing the following steps:
the centres of the circles representing the tumour and the safety margin are positioned such that said circles are concentric;
an offset of the centre of the circle representing the ablated region is calculated from the centres of the circle representing the tumour and the one representing the safety margin by determining from the comparison of the first image with the at least second image the percentage of ablation of the tumour and of the safety margin. Using these data, said offset is calculated by an iterative algorithm, relatively to the circle representing the tumour and to the circle representing the safety margin. This iterative algorithm determines said offset as distance between said centres corresponding to an intersection area of the circle representing the ablation with the circle representing the tumour and of the circle representing the ablation with the circle representing the safety margin which approximate the intersection area corresponding to the said percentage of ablated tumour determined by the comparison of the two anatomical images.

In calculating said offset, the intersection area of the circle representing the ablation area and the circle representing the safety margin must always be non-contradicting the intersection area determined between the circle representing the tumour and the circle representing the ablated tissue.

In the step 205, said icons and their relative positions are used to generate an ablation status metering display. In this case the said icons, having the dimensions and shapes according to the one determined in the previous steps, are displayed on a screen of a display 5 by giving them a different appearance, such as a different colour and by positioning said icons at a relative distance corresponding to the one calculated in the previous steps.

A further step may be also carried out by the image processor 4 which is indicated by 203 and in which step the percentage of intersection of the tumour and of the ablated region are calculated. The ablation meter display may indicate visually said calculated percentage value of ablated tumour which is related to the intersection area represented by the overlapping of the icon related to the tumour and of the icon related to the ablated region.

As a result of the above indication at step 204 and 205, the user and/or automatically the image processor is able to determine if the ablation has completely covered the region corresponding to the tumour or if the ablation process is incomplete as indicated at step 206.

If the tumour has been completely ablated, then the device is stopped and the ablation process is ended as indicated by box 207. If the intersection between tumour and ablated region is lower than 100%, the image processor may directly or indirectly start a further ablation cycle as indicated by box 201.2.

After said second of a further n-th ablation step has been carried out, a further image acquisition step of the ROI is carried out as indicated by Image acquisition step 200.N.

The image acquired by the N-th image acquisition step 200. N is then processed by the image processor in combination with the image acquired in the first image acquisition 200.1 and the image processor carries out the steps 203 to 207.

Further ablation steps followed by further post ablation image acquisitions steps of the ROI may be carried out till the intersection of the ablated region with the region corresponding to the tumour is of 100%.

When a safety margin is considered, the image processor calculates and displays also the percentage of intersection of the ablated region with the region representing the tumour and with the region representing the safety margin and the ablation is not considered complete if the intersection of the ablated region with the region corresponding to the tumour and with the region corresponding to, i.e. enclosed by the safety margin, is not 100%.

According to improvements of the above-described embodiment with reference to figure 1 and 2, the dimensions of the safety margin, i.e. the thickness of the safety layer enclosing the region corresponding to a tumour, has a fixed value which is set in the images according to indications known in the medical field. These values of the thickness depend mainly on the kind of tumour and is defined empirically by the experience in the field and is a safety condition enduring that the entire tumoral mass has been ablated including tissues which may generate metastasis.

According to a further feature, the acquired images may be three dimensional images of a three-dimensional ROI.

Figure 5 shows an example in which an image of a CT slice of the target ROI is shown on which the circular icon representing the tumour and indicated by 50 is superimposed to the region corresponding to said tumour in the image and the icon 51 representing the safety margin is also superimposed to said anatomic image.

As it appears from the image of figure 5, the anatomic target region is the liver. This without any limiting purpose of the claims of the present invention. Nevertheless, this example makes clear that the region corresponding to the tumour and indicated by the icon 50 may be near to the external surface of the liver. In the present example the distance from the external surface indicated by 52 is greater that the safety margin, so that the safety margin completely falls within said surface 52.

There might also be cases in which the region corresponding to the tumour is near or adjacent to said surface 52, so that the safety margin may extend also outside the external surface of the liver.

In this case, the image processor can be configured to identify also the opposition of said external surface of the liver with respect to the region corresponding to the tumour. In calculating the percentage of intersection between the region corresponding to the tumour and the region corresponding to the ablated tissue, the part falling outside said external surface 52 is subtracted from the intersection percentage in order to provide an information of complete coverage of the tumour by the ablation also when a part of the safety margin lies outside the liver.

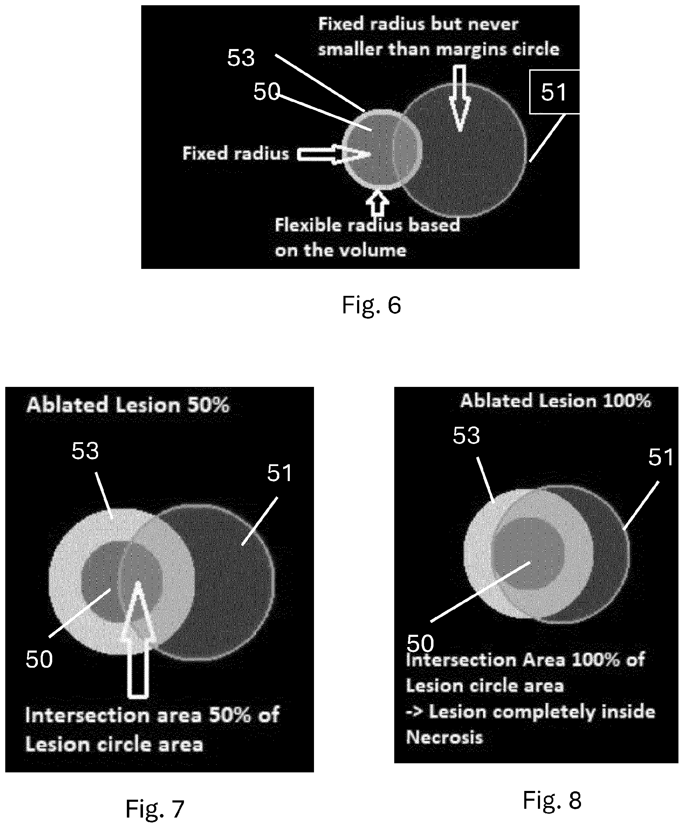

Figures 6 to 10 show several examples of the ablation status metering indicator and the corresponding graphical indications displayed on a display.

In figure 6, icon 50 represents the tumour. The radius is set as indicated as a fixed value. The safety margin, indicated by the circular annular region 53 enclosing the icon 50, has a flexible radius which is calculated as a function of the ratio of the volume of the region corresponding to the volumes of the safety margin and of the tumour. The volume of the tumour is determined from the image data according to the above disclosure. The volume of the safety margin is determined by using the volume region enclosed by a boundary drawn for the said safety margin on the images.

The third icon 51 is the circular icon representing the ablated region. The radius of this circle can be set by computation as a function of the radius set for the icon representing the tumour and, as disclosed above, is calculated as a real multiple, preferably a rational multiple, especially a natural multiple of the radius of the icon 50 representing the tumour.

The position of the icon 50 and of the icon 53 are concentric while the position of the icon 51 relatively to the icon 50 and 53 is determined as a function, respectively, of the percentage of ablated tumour determined from the image data of the first and of the at least second image.

The icon representing the ablated tissue region has a different appearance than the other icons 50 and 53 and also a certain degree of transparency so that the intersection of said icon with icons 50 and 53 corresponding to the tumour and to the safety margin may be visually appreciated.

Figure 7 shows the display of the ablation metering indicator when the tumour has been ablated for a ratio of 50% of the entire tumoral mass. Circular icon 51 representing the ablated region overlaps 50% of the circular icon 50 representing the tumour and also for only a part of the icon 53 representing the safety margin.

In figure 8 the display is shown when the ablated region has covered the entire tumoral mass. In this case the icon 50 representing the tumour is completely inside the icon representing the ablated region 51. The safety margin icon 53 is not completely covered by the icon 51 representing the ablated region. In this condition the ablation process will not be considered complete, and a further ablation cycle has to be carried out.

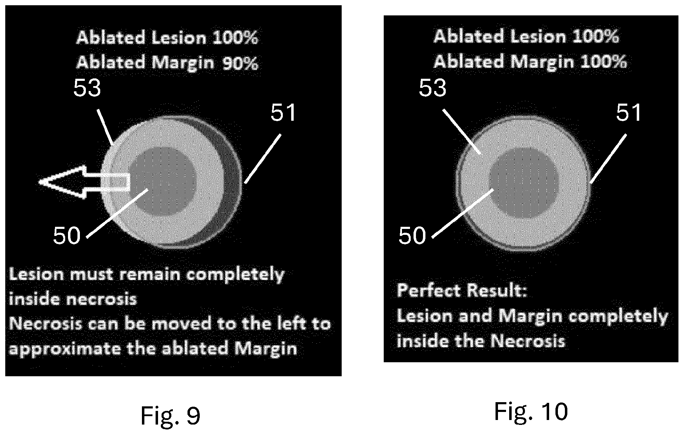

Figure 9 shows the display of the ablation metering indicator in an intermediate condition in which a further ablation cycle with respect to the one related to figure 8 has been carried out and in which the icon 50 representing the tumour is completely inside the icon 51 representing the ablated region while this icon 52 still does not cover completely the icon 53 representing the safety margin.

Finally figure 10 shows the display of the ablation metering indicator when, as the result of a further ablation cycle with respect to the one related to figure 9, the icon representing the ablated region completely encloses the icon representing the tumour and the icon representing the safety margin.

As it appears from the examples of figures 6 to 10, in combination with the representation of the icons and of their relative positions, the display may also show the computed percentage of intersection of the ablated region with the region corresponding to the tumour and with the region corresponding to the safety margin. Thus, a double control may be exercised by the user.

According to a preferred but not limited example, the ablation metering device may carry out the following steps of an ablation metering method which comprises at least two image acquisitions steps of a selected target ROI, one before and the other after the execution of an ablation cycle, and which images furnishes the data for computing the radius and relative position of the circular icons 50, 51 and 53 representing the tumour, the ablated region and the safety margin.

A first phase regards the setting and calculation of the radius of said circular icons and comprises:
setting the radius of the circular icon 50 representing the tumour to a fixed value;
setting the radius of the circular icon 51 representing the ablated region to a fixed value, which is calculated as a function of the radius of the circle representing the tumour and, according to an embodiment, as a multiple of the radius set for the icon 50, for example a multiple corresponding to a real number or to a rational number or to a natural number, such as the double the radius of the icon 50;
the following phase regards the computation of radius of the circular icon representing the safety margin and comprises the following steps:
   compute the volumes of the region corresponding to the tumour basing on the image data of the first image and the volume of the region corresponding to a safety region which thickness is set according to empirical indications for the specific kind of tumour and the boundaries of the said safety region being drawn or identified in said images;
   compute the ratio between the volume of said safety region and said tumour as determined in the previous step;
   use said ratio as a multiplicative factor for computing the radius of a circle representing the safety region. Said radius of said circle representing the safety region is calculated by multiplying the radius of the circle representing the tumour by said factor;
   setting an upper limit for said factor which is lower than the multiplicative factor for calculating the radius of the circle representing the ablated region in order to make sure that the circular icon 51 representing the ablated region will always be bigger than the circular icon 53 representing the safety margin;
   once the circular icons are defined in relation to their radius, the method provides the steps for determining the relative position of said icons one with reference to the other.

This icon positioning phase comprises the following steps:
set the position of the circular icons 50 and 53 related to the tumour and to the safety margin into in a fixed position in which the centres of the said circular icons are coincident;
compute the horizontal offset for the centre of the circular icon 51 representing the ablated region from the centre of the icons 50 and 53 representing the tumour and the safety margin by using percentage of ablated tumour and of ablated safety margin determined form the image data of the said first and second images;
determine the intersection area between the icons 50, 51 and 53 as a function of said percentage of ablated tumour and ablated safety margin calculated in the previous step and calculate, by applying an iterative process, the offset of the centre of the circle representing the ablated region from the circle representing the tumour and the safety margin by approximating the intersection area between said circles representing said percentage of ablated tumour and of ablated safety margin determined from the image data of the images;
if the percentage of the ablated tumour percentage is 0 or 100% (completely outside or completely inside the ablated region), use the percentage of the ablated safety margin to fine tune the icon;
by computing the offset of the circle representing the ablated region and the circle representing the safety margin, the condition must not be violated relating to the offset and the intersection area computed for the circle representing the tumour.

The ablation status metering device according to the present disclosure may be provided in combination with any kind of imaging device which is able to acquire images.

Particularly relevant are in this case ultrasound imaging systems which ensure relatively short imaging times.

For the sake of completeness of the disclosure, Figure 3 shows a non-limiting example of an ultrasound imaging system which could be provided in combination with the device according to the present disclosure.

The ultrasound imaging apparatus according to figure 3 comprises a probe 101 which may include various transducer array configurations, such as a one-dimensional array, a two-dimensional array, a two-dimensional array, a linear array, a convex array, and the like. The array transducers can be operated as 1D array, 1.25D array, 1.5D array, 1.75D array, 2D array, 3D array, 4D array, etc.

The ultrasound probe 101 is coupled via a wired or wireless link to a beamformer 103. The beamformer 103 includes a transmitting (TX) beamformer and a receiving (RX) beamformer which are jointly represented by the TX/RX beamformer 103. The parts TX and RX of the beamformer can be implemented together or separately. The beamformer 103 provides transmit signals to the probe 101 and beamforms the receive "echo" signals received from the probe 101.

A TX waveform generator 102 is coupled to the beamformer 103 and generates the transmit signals that are provided by the beamformer 103 to the probe 101. The transmit signals may represent various types of ultrasonic TX signals, such as those used in connection with B-mode imaging, Doppler imaging, colour Doppler imaging, pulse inversion transmission techniques, contrast-based imaging, M-mode imaging, and similar. Additionally or alternatively, transmission signals may include single or multi-line transmission, transmission pulses may be focused on individual lines, or they may be focused to dampen larger areas or the entire ROI in the form of plane waves.

The beamformer 103 performs beamforming on received echo signals to form beamformed echo signals in connection with the locations of pixels distributed in the region of interest. For example, in accordance with certain embodiments, the transducer elements generate raw analog receive signals that are provided to the beamformer. The beamformer adjusts delays to focus the receive signal along one or more selected receive beams and at one or more selected depths within the region of interest (ROI). The beamformer adjusts the weighting of the receive signals to achieve the desired apodization and profile. The beamformer applies weights and delays to the receive signals of the probe's corresponding individual transducers. The delayed and weighted receive signals are then summed to form a coherent receive signal.

The beamformer 103 includes (or is coupled to) a preamplifier and/or A/D converter 104 that digitizes the receive signals at a selected sampling rate. The digitization process can be performed before or after the summing operation that produces the coherent receive signals. The beamformer also includes (or is coupled to) a demodulator 105 that demodulates the receive signals to remove the carrier waveform. Once the receive signals are demodulated and digitized, complex receive signals are generated that include I, Q components (also called I, Q data pairs). The I, Q data pairs are stored in memory as image pixels. The I, Q data pairs, which define the image pixels for the corresponding individual positions along the corresponding lines of sight (LOS) or lines of sight. A collection of image pixels (e.g. I, Q data pairs) are collected over time and saved as 2D frames and/or 3D volumes of image data. Image pixels correspond to tissues and other anatomy within the ROI.

Optionally, a dedicated sequence/timing controller 110 can be programmed to manage the timing of the acquisition, which can be generalized as a sequence of shots aimed at selecting reflection points/targets in the ROI. The sequence controller 110 manages the operation of the TX/RX beamformer 103 in connection with the transmission of ultrasonic beams and the measurement of image pixels at individual LOS positions along the lines of sight. The sequence controller 110 also manages the collection of the receive signals.

One or more processors 106 and/or CPU 112 perform various processing operations as described herein.

For example, processor 106 executes a B/W module to generate B-mode images. Processor 106 and/or CPU 112 executes a Doppler module to generate Doppler images. The processor runs a Colour flow module (CFM) to generate colourful images. Processor 106 and/or CPU 112 may implement additional ultrasound imaging and measurement operations. Optionally, processor 106 and/or CPU 112 may filter the first and second movements to eliminate motion-related artifacts.

An image scan converter 107 performs image pixel scan conversion to convert the image pixel format from the coordinate system of the ultrasound acquisition signal path (e.g., the beamformer, etc.) and from the display coordinate system. For example, the scan converter 107 can convert image pixels from polar coordinates to Cartesian coordinates for frames.

A kinetic memory not illustrated in detail stores a collection of frames over time. Frames can be stored with formats in polar coordinates, Cartesian coordinates, or another coordinate system.

An image display 109 displays various ultrasound information, such as frames and measured information according to embodiments herein. The display 109 shows the ultrasound image with the region of interest indicated.

A control CPU module 112 is configured to perform various tasks such as user/interface implementation and overall system configuration/control. In case of a fully software implementation of the ultrasonic signal path, the processing node usually also hosts the control CPU functions.

A power supply circuit 111 is provided to power the various circuits, modules, processors, memory components and the like. The power supply 111 may be an alternating current power source and/or a battery power source (e.g., in connection with portable operation).

According to the present embodiment and by way of example, the processor 106 can be associated with or possibly also comprise an ECG monitoring module which receives the signals of an ECG (not shown in detail) and which allows to combine the acquisition of images with the ECG signals according to the different variants of known techniques for acquiring images synchronized using the ECG signal.

With reference to the present invention, the Processor 106 and or the CPU 112 can be configured as the control unit 3 and as the image processor 4 of the present disclosure. This is possible by providing the control program and the image processing programs which can be executed by one of more of the said processors and CPU 106 and/or 112 and in which programs the instructions are coded in a machine readable form which makes the processors and the connected peripherals able to carry out at least a part or all the steps which are executed by the ablation metering device according to the present invention. The processor 106 and/or the CPU 12 or other peripherals connected to it can read said programs from the memory and execute the instructions coded therein so that they can provide the functions which has been disclosed in a more general way in the previous description.

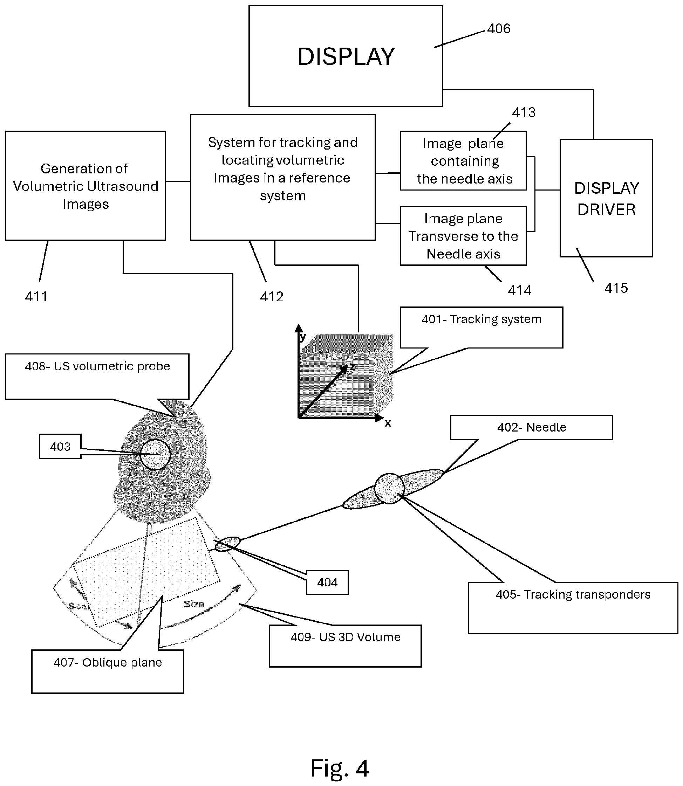

In relation to figure 4, this figure shows a high-level block diagram of a device for guiding ablation needles which could be part of the device of the present invention, although the exact tracking of the ablation tool appears not to be necessary for metering the ablation process.

In any case most ablation devices use a needle guidance system which allows to track the position and the orientation of the ablation tool and the position of the necrotized tissue within a target ROI.

The ablation needle guiding and tracking systems require at least one detector to be mounted to the element whose displacement or position is to be monitored, which marker/detector, with reference to the tracking system used herein, is a transponder. A transmitter-receiver unit can detect the marking transponder and determine the probe position. The marker means associated with the probe 408 are designated by numeral 403.

Numeral 409 designates the volumetric image acquired by the volumetric probe 408.

Numeral 402 designates a surgical tool and particularly a needle or similar elongate, rod-like element. These tools may include, for example, biopsy needles, cannulas for insertion of a variety of devices, thermoablation needles or the like.

The needle or rod-like element has a characteristic functional axis, and in this case this axis is the axis of the needle which coincides with the insertion axis. Different types of tools may have different characteristic functional axes. For example, in the case of a surgical knife, the characteristic working axis may be the cutting edge of its blade. The characteristic functional axis of a particular type of tool can be determined in an intuitive and simple manner.

The needle 402 may carry a single sensor or marking transponder, which is sufficient to determine the position of the tool and its orientation, particularly with reference to the characteristic working or functional axis of said needle which, as mentioned above, is the central longitudinal axis of the needle.

However, according to the improvement of the figures, the tool, i.e. the needle 402 carries two or more sensors or marking transponders, designated by numerals 403, 404. This improvement allows detection of any needle bending, which can be thus accounted for while operating the system.

Therefore, in the case of the needle 402 of the figures, two transponders are located at a certain distance from each other, coincident with the needle axis, and can be used to determine the needle orientation with particular reference to the insertion direction, as well as any deformation, particularly bending or curving of the needle. When a transponder is mounted directly to the tip or at a predetermined distance therefrom, the position of the needle tip can be determined upon insertion into the body under examination.

The sensor or transponder at the tip of the needle 402, here the transponder 404, shall not necessarily be placed at the tip but, as mentioned above, it may be located at a predetermined known distance from the tip. In this case, once the position of the transponder 4 has been detected, the position of the tip may be determined by a simple arithmetic operation.

Numeral 407 designates a cutting plane of the 3D image that has a predetermined inclination relative to the characteristic functional axis, i.e. the longitudinal central axis, i.e. the direction of insertion of the needle 402.

A 2D image of the object is generated along said cutting plane, using the image data of the 3D image.

This process consists in determining the subset of voxels of the 3D image that falls within the predetermined cutting plane 407, to generate a 2D image. This may occur in a known manner, as disclosed for instance in the above-mentioned patent applications by the applicant hereof, and particularly in EP 1167996.

Processing occurs in a control and processing unit typically incorporated in ultrasonic imaging apparatus, which substantially consists of a processing unit that stores and executes special ultrasound apparatus control programs for transmitting and receiving ultrasound signals, for focusing the ultrasound signals transmitted by the probe and the ultrasound signals received by the probe upon reflection of the transmitted signals, for converting the received signals into image data and for generating and displaying images on a monitor, as well as for monitoring the execution of other operations that depend on the ultrasound signal acquisition and processing mode being used. The processing unit also controls the tracking system, which may be provided as software or dedicated hardware controlled by said software.

The processing unit is designated by its functional blocks only, which are generally used to execute the operations of the present invention. Thus, the block 411 generally includes all hardware and software units required for 3D imaging (see also EP 1681019 and EP 1167996). Thanks to the tracking system, the 3D image is assigned a well-defined position in a reference Cartesian system, which is defined by the tracking system that detects the position of the probe 408. The tracking system simultaneously detects the position of the needle or other tool 402 and the orientation of the characteristic functional axis of such tool 402 with reference to the same reference system defined by the tracking system. This will provide well-defined relative positions between the volumetric image and the position and orientation of the tool 402, i.e. the characteristic functional axis thereof.

In these conditions, a cutting plane may be defined in the 3D or volumetric image generated by the probe 408, which plane has a predetermined inclination relative to the characteristic functional axis of the tool 402.

Multiple cutting planes may be also defined, having predetermined and different positions and orientations relative to said characteristic functional axis of the tool 402.

Particularly, referring to the needle, a cutting plane may be defined, which is oriented perpendicular to the characteristic functional axis of the tool 402 and is at a predetermined distance from the internal or front-end tip, with reference to the direction of insertion of the needle. In this case, the image generated along said cutting plane and reconstructed from the volumetric image data, i.e. the voxels that fall within such cutting plane will be as viewed by an observer situated at the tip of the needle and looking towards the longitudinal axis of the needle in the direction of insertion of the latter.

Alternatively, to or in combination with the above, images may be also generated along different cutting planes.

A possible additional cutting plane might be the plane that contains the longitudinal axis of the needle 402, with the path of the needle into the body under examination being thus visible.

The images obtained along the various cutting planes may be displayed in succession, i.e. alternate to each other or in side-by-side or simultaneous arrangement.

This condition is shown by the functional blocks 413 and 414, which designate all hardware and software units required to define the above-mentioned cutting planes and generate images along said cutting plane, as well as simultaneously or alternately display them using display drivers 414 on the display 415.

The use of a volumetric probe 408 allows the above process to be accomplished in a very short time, wherefore imaging may be deemed to occur in real time.

## Claims

1. Ablation status measuring device comprising:
a) an imaging device (1) for acquiring image data of at least a region of interest (ROI) located in a target body and containing a target object to be ablated;
b) an ablation device (2);
c) a control unit (3) configured to operate the imaging device so that a sequence of at least two anatomical images of the target ROI is acquired separated by a certain time interval, which is dedicated to allow the activation of the ablation device (2);
d) an image processor (4) configured to process the at least two images generated by the imaging device and register said images,
wherein said image processor is configured to:
i) carry out an image segmentation of said images and carry out, automatically or by manual selection of a user, the identification of one or more regions, such as pixels or voxels in the images of said ROI, representing a tumour and the regions subjected to ablation by said ablation device;
ii) calculate from the image data the position and dimension of the tumour volume or area and the position and dimension of the ablation volume or area in said at least two anatomic images;
iii) generate a bidimensional icon (50) having a predefined shape and a predefined dimension and representing the imaged tumour in said first image and a further bidimensional icon (51) having a predefined shape and a predefined dimension representing the ablated tissue and for which the ablated dimensions are set as a multiple of the dimensions of the bidimensional icon (50) representing the tumoral tissue, said multiple being a multiplicative factor of the dimensions of the bidimensional icon representing the tumour which multiplication factor is selected within the real numbers, preferably the rational numbers or the natural numbers;
iv) determine the centres of the shapes of said bidimensional icons (50, 51) and position said centres one with respect to the other in such a way that the relative positions of the bidimensional icons representing the ablated region (51) and representing the tumoral region (50) are calculated as a function of the ablated percentage of the tumoral tissue determined by comparing the tumoral region identified and segmented in a first anatomical region of a ROI containing said tumoral tissue with the region in the same ROI identified as ablated tissue in said second of the said at least two anatomic images;
v) display said bidimensional icons (50, 51) together on a display (5) by positioning said two icons one with respect to the other at the distance of the centres thereof calculated at step iv) and each icon having its predetermined shape and its predetermined dimension according to iii), the said two icons overlapping each other in a measure correlated to the percentage of ablated tissue tumour calculated from the at least two images;
vi) activate alternatively one to the other the ablation device (2) and the imaging device (1) for at least one or more times further to the first activation of the ablation device (2) and to the second activation of the imaging device (1); and
vii) carry out the computations and display according to iv) to v) for the first image and the n-th image at an n-th repetition of the image acquisition.

2. The device according to claim 1, wherein the imaging device (1) is a CT imaging device, an ultrasound imaging apparatus, a PET apparatus, SPECT apparatus, an MRI apparatus or the like apparatus or combination thereof.

3. The device according to claim 1 or 2, wherein the bidimensional icons (50, 51) representing the tumour and the ablated region have the shape of circles.

4. The device according to one or more of the preceding claims, wherein the image processor (4) is configured to generate a further icon (53) representing a so called safety margin and having a predefined shape and a predefined dimension, said further icon (53) being a bidimensional icon, wherein the shape and/or the dimensions of said icon (53) are calculated as a function of the dimensions of the tumour and of the ablated area and in such a way to enclose the region representing the tumour.

5. Ablation metering device according to one or more of the preceding claims, wherein the image processor (4) is configured to:
set the shape of the bidimensional icon (53) representing a safety margin as the same shape of the bidimensional icon representing the tumour (50);
define in said first image data a closed surface enclosing the tumour and having a certain predefined distance from the surface of the region identified as a tumour in the said first image;
compute from the segmented image data of the first image the volumes of the tumour and the volume of the safety margin;
compute the ratio between the volume of said margin and of the tumour;
determine the dimension of said bidimensional icon (53) representing the safety margin by multiplying the bidimensional dimensions of the icon (50) representing the tumour by a factor corresponding to said ratio;
set an upper maximum value to said factor lower than the multiplicative factor for calculating the dimension of the bidimensional icon (51) representing the ablated region;
display the bidimensional icon (53) representing said safety margin together with the icons representing the tumour (50) and the ablated region (51) with its centre coinciding with the centre of the bidimensional icon representing the tumour.

6. The device according to any preceding claims, wherein the dimensions of the safety margin are set according to a ratio between the volume of the tumour calculated from the acquired image before ablation and the volume of a safety region set according to empirical data provided for the imaged kind of tumour and setting a maximum value for said ratio.

7. The device according to any preceding claims, wherein the image processor (4) is configured to display the intersections of the circular icons visually to the user and/or the percentage of ablated tumoral tissue and of the ablated tissue within the safety margin and also the direction for displacing the ablation tool in order to continue ablation for covering the entire region occupied by the tumour and also enclosed or delimited by the said safety margin.

8. The device according to any preceding claim, wherein the icons (50, 51, 53) are all of circular shape and their dimensions are calculated referring to their radius, wherein the image processor (4) is configured to:
set the radius of the bidimensional icon (50) representing the tumour to a certain value;
set the radius of the bidimensional icon (52) representing the region subjected to ablation, i.e. the necrotized region, by multiplying by a predetermined real number the value of the radius set for the bidimensional icon (50) representing the tumour; and
determine the radius of the bidimensional icon (53) representing the safety margin by multiplying the radius of the icon (50) representing the tumour by the ratio between the volumes of the tumour and of the safety margin as determined on the first image.

9. The device according to any preceding claims, wherein the image processor (4) is configured to:
calculate the distance of the icon (50) representing the tumour from the icon (51) representing the ablated region by determining the offset of the centre of said icons along an axis by determining the intersection area between said icons calculated as a function of the percentage of the ablated tumour which is determined from the comparison of said first image and an image following an n-th ablation step and by using an iterative algorithm for approximating the computed intersection area between the tumour and the ablated region in said images;
compute the distance of the icon (51) representing the ablated region from the icon (53) representing said safety margin by determining the offset of the centre of said icons along said axis by determining the intersection area between said icons from the percentage of the ablated safety margin which is determined from the comparison of the said first image and an image following an n-th ablation step and by using an iterative algorithm for approximating the computed intersection between the safety margin and the ablated region and without violating the previously computed value of the intersection area between the tumour and the ablated region in said images.

10. The device according to any preceding claims, wherein, when the tumour is near to the border (52) of a target organ and the safety margin is intersecting said border and falling also in the region of the tissue outside said target organ of the image, the image processor (4) is configured to limit the safety margin to the region inside the border (52) of the target organ, not taking into account the region of the safety margin falling outside of the said border of the target organ.

11. Method for measuring the status of an ablation process of a tumoral tissue, comprising:
i) acquiring at least two anatomic images of a ROI at different times, one of the said images being an image acquired prior to the execution of an ablation process and a second one of the said images being an image acquired after the execution of said ablation process;
ii) segmenting and registering the anatomic images for determining image regions representing a tumour in the first one of said images and a region subjected to ablation in the second one of said images;
iii) generating an icon (50) representing the tumour, an icon (51) representing the ablated area and an icon (53) representing a region enclosing the tumour and smaller than the ablated area, named safety margin;
iv) selecting a circular shape for said icons and defining a predetermined fixed radius for the icon (50) representing the tumour while the radius of the circle (51) representing the ablated region is calculated as a multiple of the radius set for the circle (50) representing the tumour, said multiple being calculated by a multiplicative factor being a real number, preferably a natural number;
v) calculating the radius of the circle (53) representing said safety margin by multiplying the radius of the circle (50) representing the tumour by a factor corresponding to the ratio between the volume of the safety margin and the volume of the tumour which are determined from said first and said at least second anatomical images and by setting a maximum value for said factor which is smaller than the multiplicative factor for calculating the radius of the circle (51) representing the ablated region calculated in step iv);
vi) determining the relative position of the circles representing the tumour and the safety margin, which position corresponds to a concentric position of said circles;
vii) calculating the position of the centre of the circle (51) representing the ablated region relatively to the centre of the circle (50) representing the tumour by computing the intersection area of the circle (50) representing the tumour and the one (51) representing the ablated region as a function of the percentage of the of the ablated tumour determined from the comparison of said first image and said second image by means of an iterative algorithm calculating the distance of the centre of the circle representing the ablated region and of the circle representing the tumour resulting by approximating said intersection area;
viii) calculating the position of the centre of the circle (51) representing the ablated region relatively to the centre of the circle (53) representing the safety margin by computing the intersection area of the circle (53) representing the safety margin and the one (51) representing the ablated region as a function of the percentage of the ablated safety margin determined from the comparison of the said first image and said second image and by means of an iterative algorithm calculating the distance of the centre of the circle representing the ablated region and of the circle representing the safety resulting by approximating the said intersection area, without violating the conditions determined at step vii);
ix) displaying said circles (50, 51, 53) on a display (5) having different colours or grey shades and the circle (51) representing the ablated region having a level of transparency such that, when overlapped on the other circles (50, 53), said circles are still visible and positioning the centres of said circles such that the circle (50) representing the tumour and the circle (53) representing the safety margin are concentric and the centre of the circle (51) representing the ablated region is offset from the centres of the circles (50, 53) representing the tumour and the safety margin such that an intersection area is generated between said circles corresponding to the percentage of the ablated tumour and to the percentage of the ablated safety margin as determined at step vii) and viii).

12. Method according to claim 11, wherein further comprising:
carrying out a predefined sequence comprising a pre-ablation acquisition of a first anatomic image of a target ROI and a certain number of post-ablation acquisitions of anatomic images of said target ROI, said certain number of acquisitions comprising at least a second n-th image acquisition at certain time intervals one from the other;
performing the image processing steps ii) to ix);
and at step ix) each time updating the displayed icons of the tumour and of the safety margin and of the ablated region and their relative position as a function of the data determined at step ii) to viii).

13. Method according to claims 11 or 12, further comprising, when the tumour is near to the border of a target organ and the safety margin set is intersecting said border and falling also in the region of the tissue outside said target organ of the image, limiting the safety margin to the region inside the border of the target organ, not taking into account the region of the safety margin falling outside of the said border of the target organ.

14. A computer product directly loadable into the memory of a digital computer and comprising software code portions for performing the method according to any of the preceding claims 11 to 13 when the product is run on a computer.

15. A combined imaging device (1) and ablation device (2), comprising a control unit (3) configured to carry out a control software comprising the instructions for making the imaging device (1) capable of executing a time sequence of anatomic image acquisitions of a ROI, the time interval between two following acquisitions being such as to allow to carry out an ablation process, said imaging device (1) comprising an ablation status measuring device according to one or more of the preceding claim 1 to 10 and having an image processor (4) executing a software in which the instructions are coded for making said control unit and/or said image processor able to execute the steps of the above disclosed ablation process metering method according to one or more of the claims 11 to 13.
